# FASCICULE DE BREVET EUROPEEN

(11) **EP 2 766 858 B1**
(45) Date de publication et mention de la délivrance du brevet: **23.09.2015**
(21) Numéro de dépôt: 12780117.3
(22) Date de dépôt: 09.10.2012
(51) Int. Cl.: G06K 19/08, G06K 19/06

(54) **DISPOSITIF DE MARQUAGE**
MARKIERUNGSVORRICHTUNG
MARKING DEVICE

(30) Priorité: 10.10.2011 CH 16522011
(43) Date de publication de la demande: 20.08.2014
(73) Titulaire: Lacôte, Emilia, 2416 Les Brenets (CH)
(72) Inventeur: PEREZ, Antonio, 2416 Les Brenets (CH)
(74) Mandataire: GLN SA
(86) Numéro de dépôt international: PCT/EP2012/069976
(87) Numéro de publication internationale: WO 2013/053716

(56) Documents cités:
- EP-A1- 2 159 072
- FR-A1- 2 877 472

## Description

### Domaine technique

La présente invention se rapporte au domaine technique du marquage de marchandises, telles que des pièces industrielles, de produits, d'articles ou d'emballages, à des fins d'identification et d'authentification.

Par marchandises, il convient d'entendre également, de façon non exhaustive, des objets de luxes tels que des pièces d'horlogerie, des bijoux, des objets d'art et des sacs ou des vêtements.

L'identification et l'authentification des marchandises sont devenues essentielles de nos jours tant pour des raisons de traçabilité que pour des raisons de lutte contre les contrefaçons.

Il est donc recherché de manière constante de pouvoir garantir l'origine des marchandises d'une part et de pouvoir établir qu'il s'agit de fabrications légales ou contractuelles. L'identifiant d'une marchandise est donc un élément essentiel pour établir une traçabilité de ladite marchandise. L'identifiant peut être associé à une marchandise individuelle, à un lot de marchandises ou à un emballage de la ou des marchandises. Il existe des identifiants sous diverses formes.

L'identification et l'authentification sont effectuées souvent à l'aide d'une comparaison de l'identifiant à des données préenregistrées, en utilisant soit des systèmes optiques, soit à l'oeil nu.

Il est aussi recherché de manière constante de créer des identifiants infalsifiables.

### Etat de la technique

Il est connu par exemple par l'intermédiaire du document WO 2004/054444 de mettre en oeuvre un procédé d'identification et d'authentification d'un identifiant rattaché par exemple à un objet. L'identifiant est réalisé à partir d'une distribution aléatoire d'hétérogénéités dans une matière transparente. L'identification et l'authentification sont effectuées en comparant une image bidimensionnelle de l'identifiant, à des images stockées dans une base de données. Un tel procédé présente cependant des inconvénients, notamment au niveau de la fabrication de l'identifiant. En effet, cette fabrication est relativement longue et complexe dans la mesure où elle nécessite l'utilisation d'une matière fusible, de moyens pour disperser des hétérogénéités dans ladite matière et d'un moule de solidification. En outre, un tel identifiant n'est pas esthétique. Il n'est donc pas envisageable de l'associer à des articles ou produites de luxe.

D'autre part, le document FR 2 877 472 divulgue un sceau comprenant un dispositif d'authentification comprenant soit des particules solides, soit des bulles distribuées de manière unique et aléatoire.

Et enfin, le document EP 2 159 072 divulgue un dispositif d'authentification destiné à être fixé sur une carte à puce et comprenant des particules métalliques ou des fibres fluorescentes ou des particules iridescentes distribuées de manière unique et aléatoire.

### Divulgation de l'invention

L'objet de la présente invention est de fournir un identifiant comportant un motif d'identification aléatoire, unique et infalsifiable pour marchandises, du genre pièces industrielles, produits, articles ou emballages.

Un autre objet de la présente invention est fournir un identifiant fiable et particulièrement simple à réaliser.

La présente invention vise également à fournir un identifiant pouvant être utilisé pour des applications très diverses.

Un autre objet de la présente invention est de fournir un identifiant pouvant constituer un moyen de scellage fiable, par exemple pour mécanismes, compartiments, containers ou emballages.

Un autre objet de la présente invention est de fournir un identifiant pouvant améliorer la traçabilité par exemple des ouvertures de mécanismes, containers ou emballages.

Les buts assignés à l'invention sont atteints à l'aide d'un dispositif de marquage comportant un motif d'identification unique et aléatoire comprenant :
- un compartiment creux dont au moins une paroi apparente est réalisée au moins localement avec un matériau transparent formant un accès visuel audit compartiment,
- des particules solides contenues dans le compartiment creux,
- et des moyens de codage pour comprimer les particules solides contre le matériau transparent, générant ainsi le motif d'identification.

Les moyens de codage comprennent d'une part une paroi de compression disposée en regard de la paroi apparente laquelle est solidaire d'un cylindre pour former le compartiment creux, ladite paroi de compression recouvrant l'espace contenant les particules solides et d'autre part des moyens d'activation pour déplacer la paroi de compression en direction de la paroi apparente et pour immobiliser ladite paroi de compression dans une position dans laquelle les particules solides sont comprimées et immobilisées contre le matériau transparent.

Selon un exemple de réalisation du dispositif de marquage conforme à l'invention, les particules solides présentent des couleurs et/ou des dimensions et/ou des morphologies différentes pour générer le motif d'identification accessible visuellement au travers du matériau transparent.

A titre d'exemple, les particules solides du dispositif de marquage conforme à l'invention comprennent un mélange de matériaux différents.

Selon un exemple de réalisation du dispositif de marquage conforme à l'invention, les particules solides comprennent des éléments fluorescents.

Selon un exemple de réalisation du dispositif de marquage conforme à l'invention, les particules solides sont choisies parmi une famille de particules comprenant notamment, au moins un matériau sous forme de paillettes ou de copeaux des fils, des diamants, de l'or en pépites, du sable ou d'autres cristaux spécifiques.

Selon un exemple de réalisation, le dispositif de marquage conforme à l'invention comporte un repère, du genre alphanumérique, disposé à la périphérie du matériau transparent.

Selon un exemple de réalisation du dispositif de marquage conforme à l'invention, les moyens de codage comprennent une paroi de scellage solidarisée à la paroi apparente de manière à recouvrir le compartiment creux, à comprimer et à immobiliser les particules solides.

Les moyens de codage comprennent par exemple une paroi de scellage solidarisée à la paroi apparente de manière à recouvrir le compartiment creux et à comprimer et à immobiliser le support contre le matériau transparent.

La paroi de scellage est par exemple collée ou thermoformée sur la paroi apparente.

Selon un autre exemple de réalisation du dispositif de marquage conforme à l'invention, les moyens de codage comprennent d'une part une paroi de compression disposée en regard de la paroi apparente et formant avec un cylindre le compartiment creux et d'autre part des moyens d'activation pour déplacer relativement la paroi de compression par rapport à la paroi apparente et pour immobiliser ladite paroi de compression par rapport à la paroi apparente dans une position dans laquelle les particules solides sont comprimées et immobilisées contre la paroi apparente.

Selon un exemple de réalisation du dispositif de marquage conforme à l'invention, les moyens d'activation comprennent un organe de montage, solidaire de la paroi de compression et monté en force sur le cylindre du compartiment creux.

Selon un autre exemple de réalisation du dispositif de marquage conforme à l'invention, les moyens d'activation sont réalisés par l'intermédiaire d'un dimensionnement précis de la paroi de compression et du cylindre du compartiment creux, de manière à permettre un montage en force de ladite paroi de compression dans ledit cylindre.

Selon un autre exemple de réalisation du dispositif de marquage conforme à l'invention, les moyens d'activation comprennent une vis de serrage vissée au travers d'un couvercle externe recouvrant le compartiment creux et fixé sur le cylindre du compartiment creux, la paroi de compression étant fixée sur une extrémité de la vis de serrage, une tête d'actionnement formant l'autre extrémité accessible de la vis de serrage.

Selon un autre exemple de réalisation du dispositif de marquage conforme à l'invention, la paroi de compression est traversée par l'extrémité de la vis de serrage, ladite extrémité étant solidaire en rotation d'un organe mélangeur s'étendant au dessus de la paroi de compression pour tourner avec la vis de serrage et mélanger les particules solides.

Selon un autre exemple de réalisation du dispositif de marquage conforme à l'invention, la paroi de compression est solidaire en rotation de la vis de serrage et comporte un organe mélangeur engagé dans l'espace occupé par les particules solides.

Selon un exemple de réalisation, le dispositif de marquage conforme à l'invention comporte un organe de protection recouvrant la tête d'actionnement pour empêcher d'actionner la vis de serrage.

Le dispositif de marquage conforme à l'invention présente l'avantage de pouvoir générer un motif d'identification stable, unique et infalsifiable. Le motif d'identification constitue avantageusement un code bidimensionnel. On peut également disposer plusieurs couches de particules pour former un code tridimensionnel. Une quelconque ouverture ou un accès à l'intérieur du dispositif de marquage entraîne inévitablement l'altération du motif d'identification.

Un autre avantage du dispositif de marquage conforme à l'invention réside dans le fait qu'il est facile à fabriquer et qu'il peut comprendre des éléments constitutifs simples et peu coûteux.

Un autre avantage du dispositif de marquage conforme à l'invention, est lié au fait qu'il peut comporter des matériaux nobles pour constituer un élément ornemental.

Un autre avantage du dispositif de marquage conforme à l'invention est lié au fait qu'il permet d'identifier et d'authentifier des objets très divers. Le dispositif de marquage conforme à l'invention peut ainsi être intégré à titre d'exemple dans une carte bancaire, un passeport ou une autre carte ou pièce d'identité.

Un autre avantage du dispositif de marquage conforme à l'invention est lié au fait que le motif d'identification qu'il génère peut être lu et reconnu à l'oeil nu ou avec l'aide d'une simple loupe. Une lecture du motif d'identification peut aussi se faire par l'intermédiaire d'un scanner de base. Aucun système optique complexe, comportant par exemple une source lumineuse du genre laser, n'est nécessaire pour identifier et authentifier le motif d'identification.

Un autre avantage du dispositif de marquage conforme à l'invention est lié au fait qu'il devient extrêmement facile de déceler des objets contrefaisants et ce partout dans le monde. Il suffit de disposer d'une connexion internet via laquelle on accède à un serveur sécurisé comportant une base de données dans laquelle sont enregistrés le ou l'ensemble des motifs d'identification originaux. Un logiciel adéquat, chargé sur un ordinateur de base peut s'avérer nécessaire, notamment si un nombre important de comparaisons doivent être entreprises entre un motif d'identification scanné à des fins de contrôle et les motifs enregistrés dans la base de données. Dans la mesure où le motif d'identification est unique, il ne pourra pas être dupliqué pour l'apposer sur des articles contrefaisants ou fabriqués hors contrat.

Un autre avantage du dispositif de marquage conforme à l'invention est lié au fait qu'il permet, selon certaines variantes de générer un nouveau motif d'identification aléatoire, unique et infalsifiable, par exemple à la suite d'une opération de maintenance ou de contrôle sur l'objet nécessitant d'altérer le code initial. Ce nouveau motif d'identification sera à son tour enregistré dans la base de données. Une traçabilité parfaite d'un certain nombre d'événements du genre opérations de maintenance ou de contrôle peut alors être établie.

Les buts assignés à l'invention sont également atteints à l'aide d'une pièce d'horlogerie comportant notamment une boîte, un cadran et un mécanisme agencé à l'intérieur de la boîte, caractérisée en ce qu'elle comporte un dispositif de marquage tel que présenté ci-dessus, ledit dispositif de marquage traversant le mécanisme pour présenter la paroi apparente dans une fenêtre ménagée dans le cadran et pour bloquer un couvercle du mécanisme ou une pièce retenant ledit mécanisme dans une position de montage, par l'intermédiaire du couvercle externe ou de la tête d'actionnement.

Le mécanisme comporte par exemple un mouvement d'horlogerie.

La pièce d'horlogerie conforme à l'invention présente l'avantage de pouvoir établir une traçabilité des interventions effectuées par exemple sur le mouvement.

Les buts assignés à l'invention sont également atteints à l'aide d'une pièce d'horlogerie comportant notamment une boîte, un cadran et un mouvement agencé à l'intérieur de la boîte, caractérisée en ce qu'elle comporte un module de comptage coopérant avec le mouvement et un dispositif de marquage tel que présenté ci-dessus, ledit dispositif de marquage traversant le module de comptage et le mouvement pour présenter la paroi apparente dans une fenêtre ménagée dans le cadran et pour bloquer un couvercle du module de comptage ou une pièce retenant ledit module de comptage dans une position de coopération avec ledit mouvement, par l'intermédiaire du couvercle externe ou de la tête d'actionnement. Le mécanisme protégé comporte alors le mouvement associé au module de comptage.

Selon un exemple de réalisation de la pièce d'horlogerie conforme à l'invention, le module de comptage permet d'afficher une information relative à la durée cumulée de fonctionnement de ladite pièce d'horlogerie, au travers d'un fond transparent de la boîte.

La pièce d'horlogerie conforme à l'invention présente l'avantage de mettre en évidence une ouverture ou un démontage du module de comptage. L'information affichée sur le module de comptage ne peut ainsi être modifiée sans altérer le motif d'identification unique et original. Ce dernier, une fois altéré, ne pourra donc être trouvé dans la base de données contenant l'ensemble des motifs originaux et successifs associés à la pièce d'horlogerie. L'utilisateur ou l'acheteur pourra alors émettre des doutes sur l'information affichée sur le module de comptage.

La pièce d'horlogerie conforme à l'invention constitue par exemple une montre bracelet.

Les buts assignés à l'invention sont également atteints à l'aide d'un cadenas

comportant un arceau monté sur un corps de serrure dans lequel est agencée une serrure actionnable par l'intermédiaire d'une clé spécifique, laquelle permet une fois engagée dans ladite serrure, de verrouiller et de déverrouiller l'arceau. Le cadenas comporte un dispositif de marquage tel que décrit ci-dessus le dispositif de marquage étant associé au corps de serrure de manière à laisser visible la paroi apparente et à présenter la tête d'actionnement. La tête d'actionnement est susceptible d'évoluer entre :
- une première position dans laquelle elle s'étend au moins partiellement au niveau de la serrure pour empêcher l'introduction complète de la clé spécifique dans la serrure lorsque la paroi de compression comprime et immobilise les particules solides contre le matériau transparent, et
- une deuxième position dans laquelle elle autorise l'introduction complète de la clé spécifique dans la serrure.

Le passage de la deuxième à la première position génère le motif d'identification et le passage de la première à la deuxième position entraîne une altération du motif d'identification précédemment généré.

Le dispositif de marquage peut être intégré dans le corps de serrure, la paroi apparente étant visible dans une ouverture d'une première face du corps de serrure et la tête d'actionnement étant apparente dans une autre ouverture d'une autre face du corps de serrure.

Le dispositif de marquage peut être disposé dans un module de sécurité associé audit cadenas.

Le module de sécurité est fixé sur le corps de serrure par l'intermédiaire de moyens de fixation pour empêcher l'actionnement de la serrure, les moyens de fixation étant réalisés pour coopérer avec le dispositif de marquage en actionnant la vis de serrage lors d'une séparation entre le corps de serrure et le module de sécurité.

Le cadenas conforme à l'invention présente l'avantage de pouvoir garantir qu'il na pas été ouvert ou déverrouillé, tant que le motif d'identification d'origine n'a pas été altéré.

Le cadenas conforme à l'invention présente l'avantage de constituer une serrure incorporant un moyen de scellage infalsifiable par exemple d'un compartiment, d'un local, d'un container ou autre contenant. On peut ainsi garantir qu'un espace de stockage n'a pas fait l'objet d'une ouverture non autorisée tant que le motif d'identification dûment enregistré n'a pas été altéré. Le contenu d'un container ou d'un emballage peut ainsi être identifié et authentifié avec certitude. La traçabilité dans l'acheminement de marchandises de leur site de fabrication aux points de vente peut également être établie. En effectuant des contrôles répartis par exemple sur différentes étapes du trajet d'acheminement d'un container, il devient plus facile de déceler et de localiser un accès frauduleux à l'intérieur dudit container.

En outre, le dispositif de marquage conforme à l'invention peut être réutilisé, par exemple après une opération de contrôle, en générant un nouveau motif d'identification qui sera daté et enregistré dans la banque de donnée spécifique.

Par ailleurs, on peut noter que les opérations de contrôle des douanes sont substantiellement simplifiées grâce à l'utilisation d'un dispositif de marquage conforme à l'invention.

Le dispositif de marquage conforme à l'invention peut par exemple être utilisé pour sceller une boîte de travail transparente et réutilisable, dans laquelle est logé par exemple un mouvement haut de gamme. Le fabricant peut alors constater que la boîte n'a pas été ouverte.

Par ailleurs, des enregistrements successifs au cours de l'acheminement d'un objet associé au motif d'identification unique et préenregistré, permet d'établir avec précision une traçabilité dudit objet.

### Brève description des dessins

D'autres caractéristiques de la présente invention apparaîtront plus clairement à la lecture de la description qui va suivre, faite en référence aux dessins annexés, donnés à titre d'exemple non limitatif, dans lequel:
- la figure 1 représente en vue de face, un exemple de réalisation d'un dispositif de marquage conforme à l'invention,
- la figure 2, représente une vue en coupe selon la ligne A-A du dispositif marquage de la figure 1,
- la figure 3, représente une vue en perspective du dispositif de marquage de la figures 1,
- la figure 4, représente une vue de face d'un exemple de réalisation d'un dispositif de marquage intégré dans un support,
- la figure 5, représente une vue en coupe selon la ligne D-D du dispositif de marquage de la figure 4,
- la figure 6, représente un exemple de réalisation d'une montre, en vue de dessus, comportant un dispositif de marquage conforme à l'invention,
- la figure 7, représente une partielle en coupe C-C de la montre comportant un dispositif de marquage conforme à l'invention, illustrée à la figure 6,
- la figure 8, représente un exemple de réalisation d'une montre, en vue de dessous, comportant un dispositif de marquage conforme à l'invention,
- la figure 9, illustre un exemple d'agencement entre un mécanisme d'horlogerie et un dispositif marquage conforme à l'invention,
- la figure 10, représente une vue éclatée d'un exemple de montre intégrant un dispositif de marquage conforme à l'invention,
- la figure 11, représente un agrandissement d'une partie E de la figure 10,
- la figure 12, représente un agrandissement d'une partie F de la figure 10,
- la figure 13, représente en vue de face avant d'un exemple de réalisation d'un cadenas intégrant un dispositif de marquage conforme à l'invention,
- la figure 14, représente en vue de face arrière du cadenas de la figure 13,
- la figure 15, représente selon une vue en perspective, le cadenas des figures 13 et 14,
- et la figure 16, représente en vue de face un autre exemple de réalisation d'un cadenas comportant un dispositif de marquage conforme à l'invention.

### Mode(s) de réalisation de l'invention

Les éléments structurellement et fonctionnellement identiques et présents sur plusieurs figures distinctes, sont affectés d'une même référence numérique ou alphanumérique.

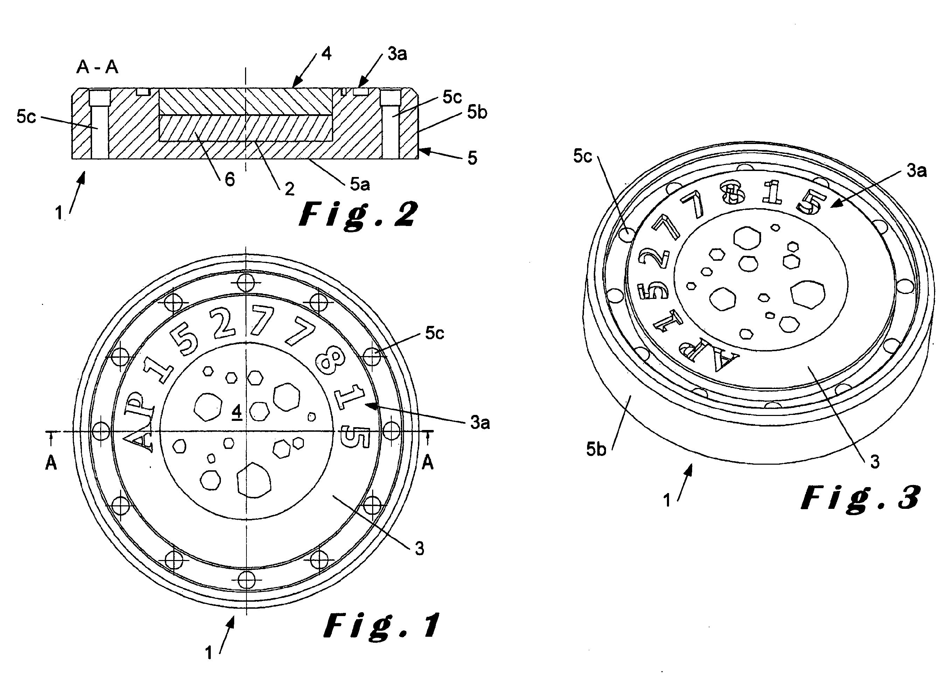

On a représenté sur la figure 1, un dispositif de marquage 1 comportant un compartiment creux 2 présentant au moins une paroi apparente 3.

La paroi apparente 3 est réalisée au moins localement avec un matériau transparent 4 formant un accès visuel audit compartiment creux 2 et plus précisément à l'intérieur dudit compartiment creux 2. Le matériau transparent 4 est par exemple un verre ou une glace en saphir.

Le compartiment creux 2 est formé par un bâti 5 constitué d'une paroi de compression 5a et d'un cylindre 5b. Le compartiment creux 2 est avantageusement recouvert par le matériau transparent 4.

Des trous de fixation 5c traversant par exemple le cylindre 5b permettent la fixation, par tous moyens, du dispositif de marquage 1 sur ou dans un objet à des fins d'identification et d'authentification.

Le dispositif de marquage 1 comprend également des particules solides 6 qui sont contenues dans le compartiment creux 2.

Selon un exemple de réalisation du dispositif de marquage 1 conforme à l'invention, les particules solides 6 présentent des couleurs et/ou des dimensions et/ou des morphologies différentes pour générer un motif d'identification accessible visuellement au travers du matériau transparent 4.

Selon un exemple de réalisation, le dispositif de marquage 1 conforme à l'invention comporte un repère 3a, du genre repère alphanumérique, disposé à la périphérie du matériau transparent 4. Le motif d'identification peut alors être reconnu plus facilement. Le repère 3a peut avantageusement constituer un numéro de série du dispositif de marquage 1. On pourrait également envisager de disposer le repère à l'intérieur du matériau transparent, ou en le marquant sur le matériau transparent.

Selon un exemple de réalisation du dispositif de marquage conforme à l'invention, les particules solides 6 comprennent au moins un matériau sous forme de paillettes ou de copeaux. Les dimensions et les formes des paillettes ou des copeaux sont de préférence aléatoires. On les choisira dans une gamme de calibrage permettant de toutes les bloquer dans le compartiment 2, comme on le comprendra ci-après.

Selon un autre exemple de réalisation du dispositif de marquage 1, les particules solides 6 comprennent des diamants, de l'or en pépites, du sable ou autres cristaux spécifiques.

Selon un autre exemple de réalisation du dispositif de marquage 1 conforme à l'invention, les particules solides 6 comprennent des éléments fluorescents.

A titre d'exemple, les particules solides 6 comprennent avantageusement un mélange de particules réalisées avec des matériaux solides différents.

A titre d'exemple, les particules solides 6, du genre diamant ou sable, peuvent être réparties autour d'un motif fixe tel qu'un emblème ou un blason.

La figure 3, représente une vue en perspective du dispositif de marquage 1 des figures 1 et 2. Le dispositif de marquage 1 constitue par exemple une pastille destinée à être fixée par exemple sur un article de vêtement, un emballage, un tableau ou un autre objet.

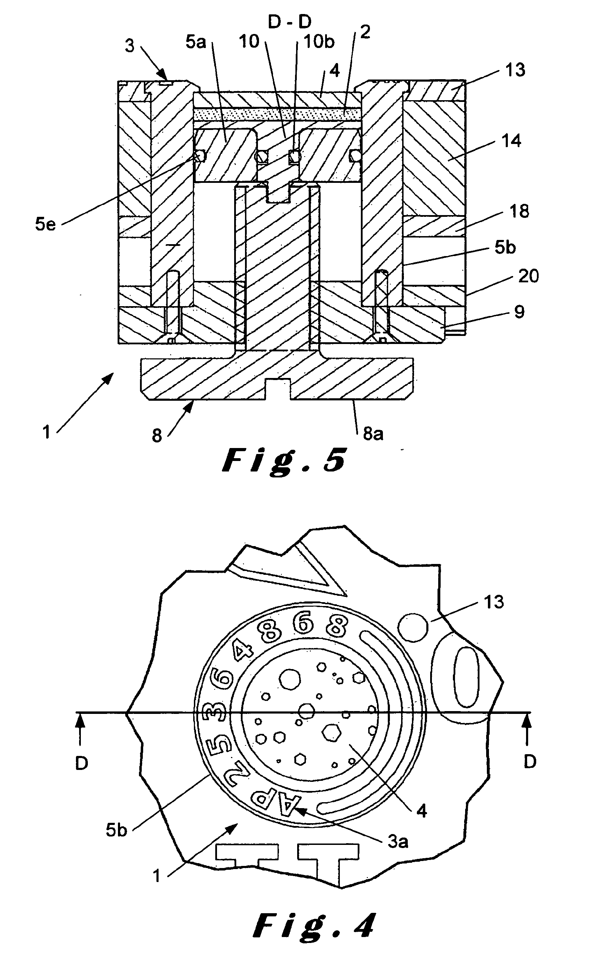

La figure 4, représente une vue de face d'un exemple de réalisation d'un dispositif de marquage 1 intégré dans un support du genre tableau ou mouvement de montre.

Le dispositif de marquage 1 comprend également des moyens de codage pour comprimer et immobiliser les particules solides 6 contre le matériau transparent 4, générant ainsi un motif d'identification bidimensionnel, aléatoire et unique.

Les moyens de codage comprennent la paroi de compression 5a, disposée en regard de la paroi apparente 3 et formant avec le cylindre 5b, le compartiment creux 2.

Les moyens de codage comprennent également des moyens d'activation pour déplacer la paroi de compression 5a en direction de la paroi apparente 3.

Dans l'exemple de réalisation illustré à la figure 5, les moyens d'activation comprennent une vis de serrage 8 vissée au travers d'un couvercle externe 9 recouvrant le cylindre 5b. Le couvercle externe 9 est fixé sur le cylindre 5b du compartiment creux 2. La paroi de compression 5a est fixée sur une extrémité de la vis de serrage 8 pour obturer le compartiment creux 2 contenant les particules solides 6 et pour coulisser dans le cylindre 5b sous l'action de ladite vis de serrage 8.

La vis de serrage 8 comporte une tête d'actionnement 8a formant l'autre extrémité accessible de la vis de serrage 8 et dont l'actionnement permet de déplacer la paroi de compression 5a.

Selon un exemple de réalisation du dispositif de marquage conforme à l'invention, la paroi de compression 5a est solidaire en rotation de la vis de serrage 8 et comporte un organe mélangeur 10 engagé dans l'espace occupé par les particules solides 6. L'organe mélangeur 10 se trouve donc en saillie sur la paroi de compression 5a. L'organe mélangeur 10 est réalisé par exemple sous forme de barrette ou de plots. L'assemblage mécanique entre la vis de serrage 8, l'organe mélangeur 10 et la paroi de compression 5a est obtenu par tous moyens connus. La paroi de compression 5a peut avantageusement être recouverte d'une couche d'un matériau souple, du genre cuir ou caoutchouc pour garantir une meilleure immobilité des particules solides comprimées.

Selon un autre exemple de réalisation du dispositif de marquage 1 conforme à l'invention, la paroi de compression 5a est traversée par l'extrémité de la vis de serrage 8, ladite extrémité étant solidaire en rotation de l'organe mélangeur 10 s'étendant au dessus de la paroi de compression 5a, pour tourner avec la vis de serrage 8 et mélanger les particules solides 6.

Selon un autre exemple de réalisation du dispositif de marquage 1 conforme à l'invention, les moyens d'activation comprennent un organe de montage (non représenté), solidaire du matériau transparent 4 et monté en force ou encastré dans le cylindre 5b. L'organe de montage forme une interface entre le matériau transparent 4 et le cylindre 5b.

Selon un autre exemple de réalisation du dispositif de marquage 1 conforme à l'invention, la paroi de compression 5a recouvre l'espace contenant les particules solides 6. Selon cet exemple, l'organe de montage des moyens d'activation est solidaire de la paroi de compression 5a et est monté en force ou encastré dans la cylindre 5b.

Selon un autre exemple, les moyens d'activation sont réalisés par l'intermédiaire d'un dimensionnement précis de la paroi de compression 5a ou du matériau transparent 4 et du cylindre 5b, de manière à permettre un encastrement en force de ladite paroi de compression 5a ou dudit matériau transparent 4 dans ledit cylindre 5b (figure 5).

Les moyens d'activation permettent donc d'immobiliser la paroi de compression 5a par rapport au matériau transparent 4, dans une position dans laquelle les particules solides 6 sont comprimées et immobilisées contre ledit matériau transparent 4. On forme ainsi un motif d'identification unique et aléatoire en bloquant les particules. Ce motif peut ensuite être enregistré dans une base de données pour en assure sa traçabilité.

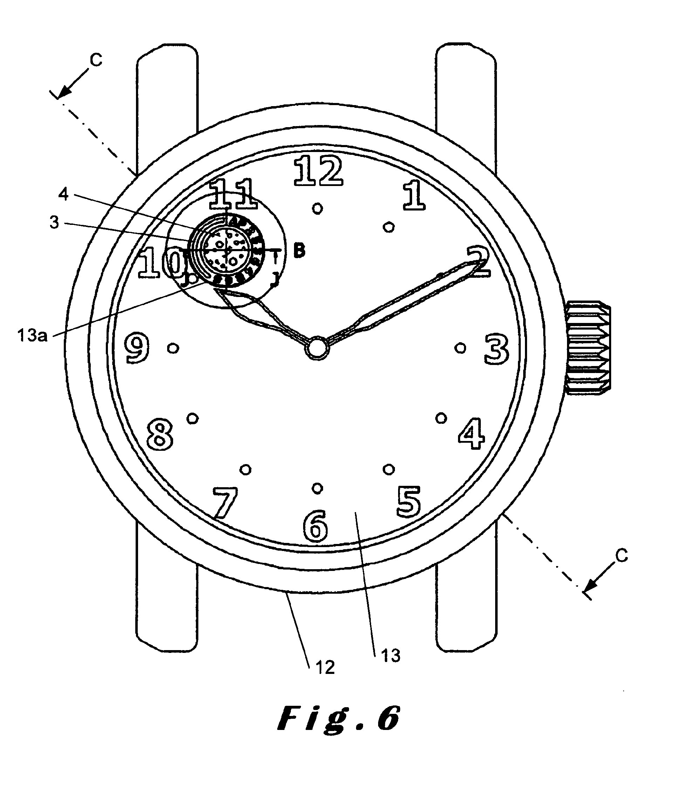

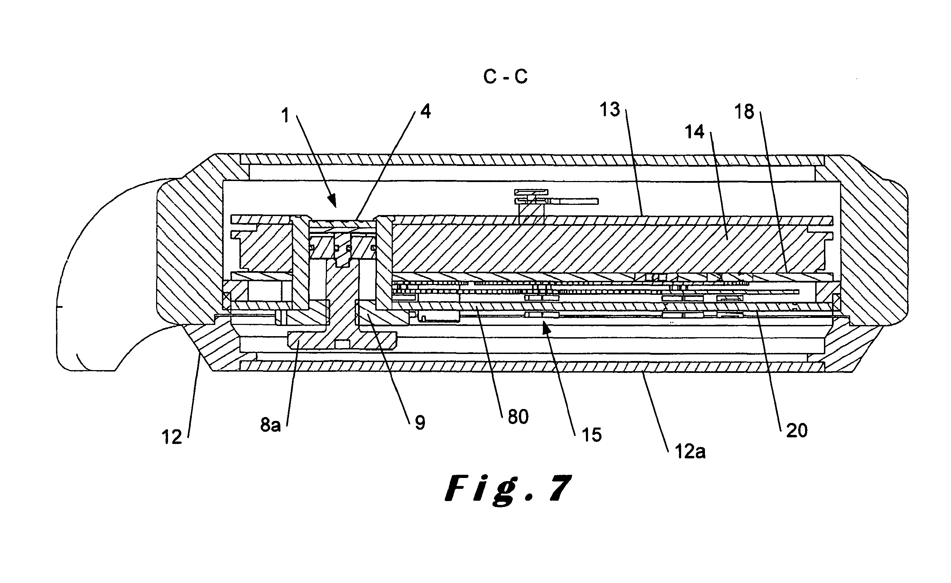

La présente invention concerne également une pièce d'horlogerie. La figure 6, représente un exemple de réalisation d'une montre, en vue de dessus, comportant un dispositif de marquage 1 visible. La figure 7 représente une vue partielle en coupe C-C de la montre de la figure 6.

La pièce d'horlogerie comporte notamment une boîte 12, un cadran 13 et un mouvement 14 agencé à l'intérieur de la boîte 12.

La pièce d'horlogerie comporte également un module de comptage 15 coopérant avec le mouvement 14 et le dispositif de marquage 1.

Le dispositif de marquage 1 traverse le module de comptage 15 et le mouvement 14 pour présenter le matériau transparent 4 dans un guichet 13a ménagée dans le cadran 13. Le dispositif de marquage 1 permet de par son montage traversant, de bloquer un couvercle/support 80 du module de comptage 15 ou une pièce retenant ledit module de comptage 15 dans une position de coopération avec ledit mouvement 14. Ce blocage est obtenu par exemple par l'intermédiaire du couvercle externe 9 ou de la tête d'actionnement 8a qui recouvre partiellement le couvercle/support 80. Le couvercle du module de comptage 15 ne peut ainsi être démonté sans ôter le couvercle externe 9. Ce dernier ne peut à son tour être démonté sans actionner la tête d'actionnement 8a.

Le dispositif de marquage 1 est par exemple fixé, par tous moyens, de manière inamovible au cadran 13 et/ou au mouvement 14.

Selon une variante de réalisation avantageuse, la paroi apparente 3 prend appui par sa périphérie sur la face supérieure du cadran 13. Le mécanisme comprenant le mouvement 14 et le module de comptage 15 est alors enserré entre la périphérie de la paroi apparente 3 et le couvercle externe 9. Le dispositif de marquage 1 ne peut alors être extrait du mécanisme sans accéder au couvercle externe 9, nécessitant par la même occasion d'actionner la vis de serrage 8 et donc d'altérer le motif d'identification.

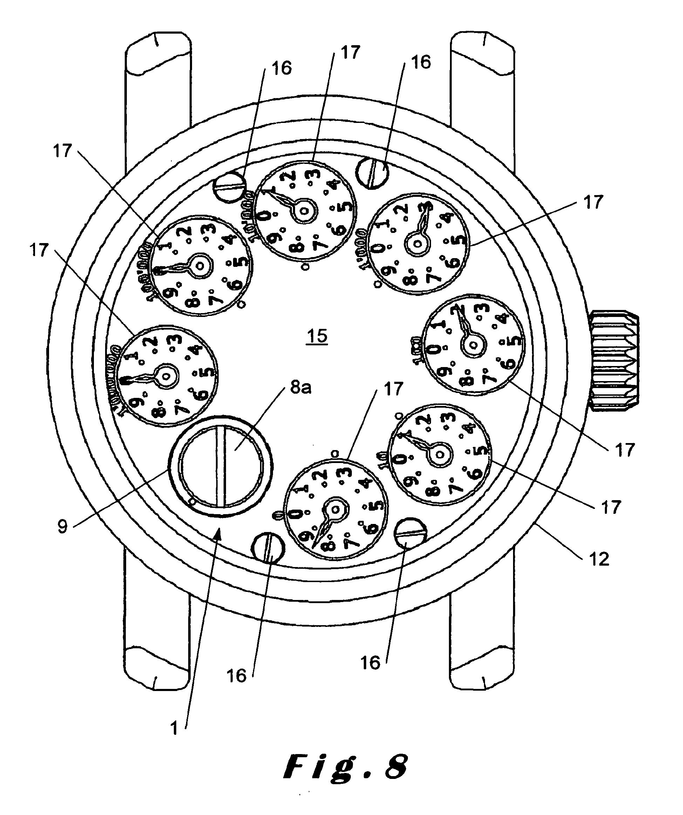

La figure 8, représente un exemple de réalisation de la montre, en vue de dessous.

Le module de comptage 15 permet d'afficher une information relative à la durée cumulée de fonctionnement de ladite montre par exemple les heures, au travers d'un fond transparent 12a de la boîte 12. Il est impossible d'accéder au mécanisme interne du module de comptage 15 ou de démonter le module de comptage 15 sans dévisser la vis de serrage 8 et par conséquent d'altérer le motif d'identification.

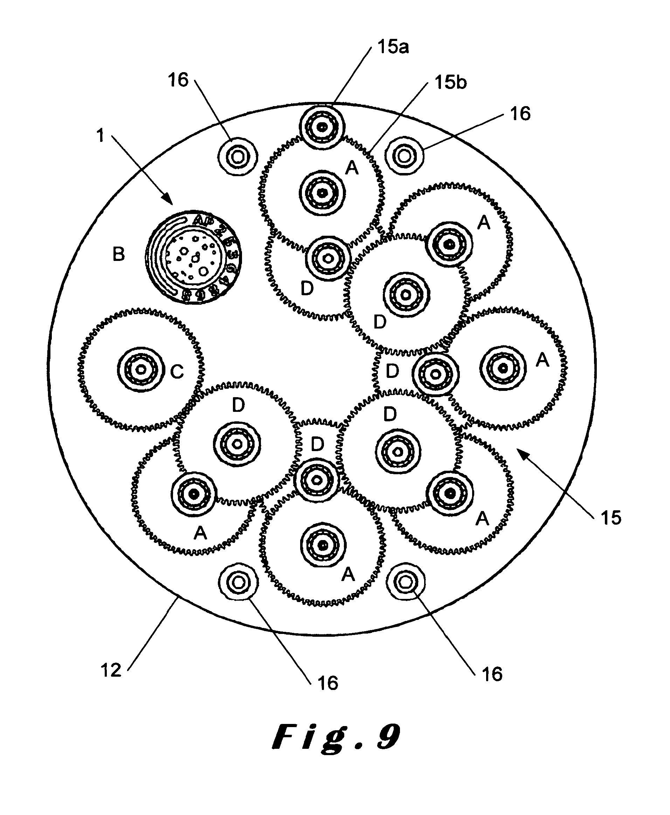

La figure 9, illustre un exemple d'agencement entre un mécanisme d'horlogerie par exemple le module de comptage 15 et le dispositif marquage 1 conforme à l'invention.

Le module de comptage 15 constitue par exemple un indicateur d'heures, fixé sur le mouvement 14 par l'intermédiaire de quatre vis 16. L'indicateur d'heures comprend avantageusement des compteurs circulaires 17.

Le module de comptage 15 comprend par exemple les éléments constitutifs suivants :
- six roues A de 70 dents associées chacune à un pignon de 7 dents et une aiguille de compteur,
- une roue C de 70 dents associée à une aiguille de compteur,
- six roues D de 70 dents pour changer les sens de rotation,
- un pignon de 7 dents faisant un tour en une heure et couplé à une roue de barillet,
- treize roulements à bille, associés chacun à une roue A, C ou D, et
- un quatorzième roulement à bille 15a portant le pignon de 7 dents et non associé à une roue.

Le module de comptage 15 est par exemple associé à un mouvement 14 du genre Unitas® 6498 mécanique. Un pignon de 12 dents des minutes se trouve au centre du mouvement 14 et s'engrène sur une roue de barillet. Un pignon de 7 dents est monté de façon coaxiale sur le pignon de 12 dents. Le quatorzième roulement 15a guidant le sous-ensemble formé par le pignon de 12 dents et le pignon de 7 dents est chassé dans un support. Le pignon de 7 dents s'engrène sur une première roue 15b de 70 dents (une roue A), de manière à obtenir un premier compteur ou compteur d'unités réalisant un dixième de tour à chaque tour du pignon des minutes.

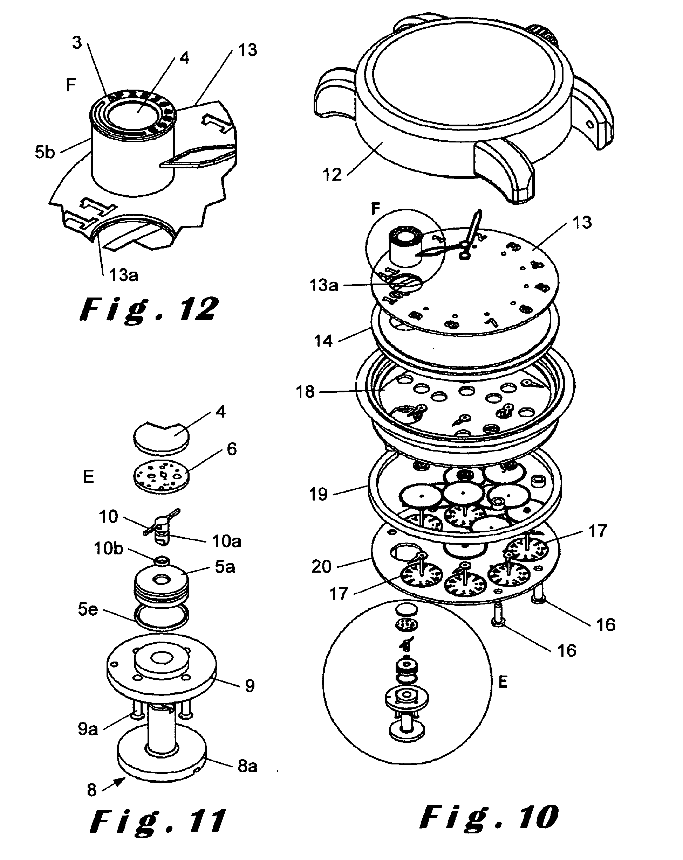

La figure 10, représente une vue éclatée d'une montre intégrant le dispositif de marquage 1 conforme à l'invention.

La montre comporte la boîte 12, le cadran 13 et le mouvement 14 sur lequel est rapporté le module de comptage 15.

Le module de comptage 15 comporte un premier pont 18 en saphir une bague 19 formant entretoise et un second pont en saphir 20. Ce dernier comporte avantageusement des indicateurs réalisés par les compteurs circulaires 17. Les aiguilles de compteur permettent d'afficher un nombre d'heures cumulées, à savoir les unités, les dizaines, les centaines, les millièmes, les dix millièmes, les cent millièmes et les millionièmes.

Le mécanisme du module de comptage 15 est enserré entre le premier pont 18 et second pont 20, par l'intermédiaire des vis 16.

Les illustrations E et F concernent chacune une partie du dispositif de marquage 1 représentées respectivement aux figures 11 et 12.

La figure 11 illustre donc en éclaté, différentes pièces constitutives du dispositif de marquage 1. On distingue par exemple des vis de fixation 9a pour fixer le couvercle externe 9 sur le cylindre 5b. Les vis de fixation 9a ne sont accessibles qu'après un dévissage de la vis de serrage 8. Le dispositif de marquage 1 ne peut donc être ôté de son objet de destination, en l'occurrence une montre, sans altérer le motif d'identification.

La paroi de compression 5a est réalisée sous forme de bouchon cylindrique traversé par une partie centrale 10a de l'organe mélangeur 10. La partie centrale 10a est solidarisée avec l'extrémité de la vis de serrage 8. La partie centrale 10a est avantageusement entraînée en rotation par la vis de serrage 8, de manière à faire tourner la partie de l'organe mélangeur 10 s'étendant au dessus de la paroi de compression 5a.

Un premier joint 10b est avantageusement disposé dans une gorge périphérique de la partie centrale 10a de manière à réaliser l'étanchéité avec la paroi de compression 5a.

Un second joint 5e est avantageusement disposé dans une gorge périphérique de la paroi de compression 5a de manière à réaliser l'étanchéité avec la paroi interne du cylindre 5b. Les joints, 5e et 10b, permettent d'éviter que des particules solides 6 ne s'échappent du compartiment creux 2, notamment lors de déplacements de la paroi de compression 5a.

La figure 12 illustre selon un agrandissement, le cylindre 5b avant son engagement par le dessus du cadran 13, dans le guichet 13a.

La présente invention concerne également une pièce d'horlogerie, du genre montre, dépourvue de module de comptage 15. Le dispositif de marquage 1 est alors monté uniquement dans le mouvement 14 ou dans un autre mécanisme.

Selon un autre exemple de réalisation conforme à l'invention, dans lequel le dispositif de marquage 1 ne peut pas être monté traversant, par exemple dans une boîte ou un mécanisme, il est envisagé de disposer la tête de vis 8a sur un support fixe dans ledit mécanisme. Le cylindre 5b présente alors au niveau de son extrémité comportant le matériau transparent 4, une forme du genre tête de vis ou écrou, permettant un vissage et un serrage sur la vis de serrage 8. On effectue alors le serrage en agissant sur le cylindre 5b.

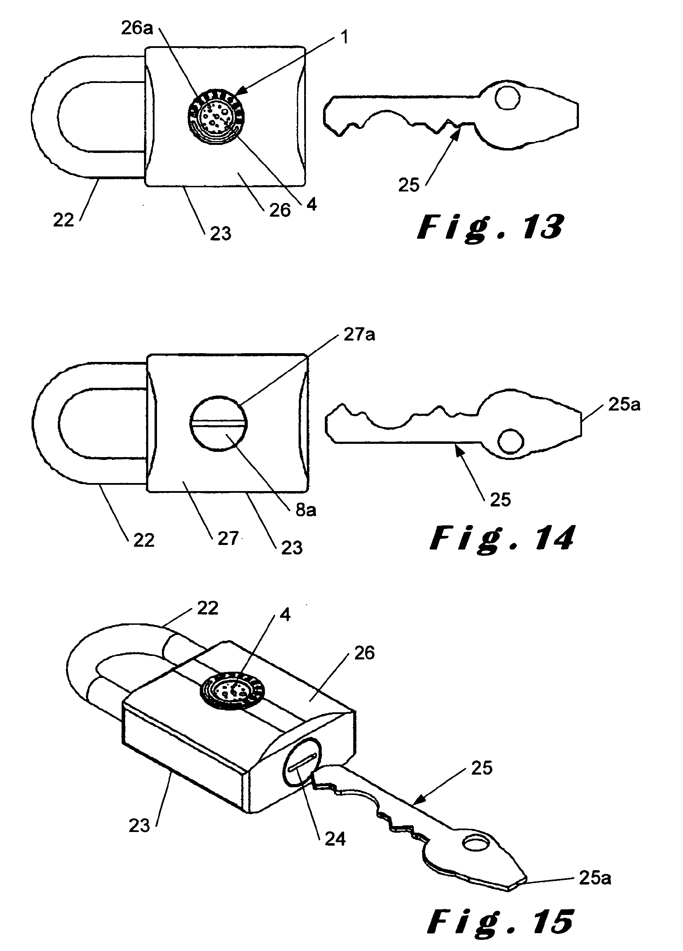

La figure 13, représente en vue de face avant d'un exemple de réalisation d'un cadenas intégrant un dispositif de marquage 1 conforme à l'invention et la figure 14, représente en vue de face arrière dudit cadenas.

La figure 15 est une illustration de ce même cadenas selon une vue en perspective.

Le cadenas comporte un arceau 22 monté sur un corps de serrure 23. Une serrure 24, actionnable par l'intermédiaire d'une clé spécifique 25, est agencée dans le corps de serrure 23. La clé spécifique 25, une fois engagée dans ladite serrure 24, permet de verrouiller et de déverrouiller l'arceau 22.

Le dispositif de marquage 1 est monté dans le corps de serrure 23 de manière à présenter la paroi apparente 3 dans une ouverture 26a d'une première face 26 dudit corps de serrure 23 et à présenter la tête d'actionnement 8a dans une autre ouverture 27a d'une autre face 27 dudit corps de serrure 23.

La tête d'actionnement 8a s'étend au moins partiellement dans le corps de serrure 23 pour empêcher l'introduction complète de la clé spécifique 25 dans la serrure 24, lorsque la paroi de compression 5a comprime et immobilise les particules solides 6 contre la paroi apparente 4 dans le dispositif de marquage 1, en définissant le motif d'identification.

La tête d'actionnement 8a est, après avoir été actionnée et par conséquent en altérant le motif d'identification, disposée dans une position autorisant l'introduction complète de la clé spécifique 25 dans la serrure 24.

Pour ce faire, l'extrémité de la vis de serrage est dissociable du mélangeur 5, l'un et l'autre comportant une structure complémentaire, permettant un engagement de l'une dans l'autre et une solidarisation en rotation de la vis de serrage et du mélangeur. Par exemple, la vis de serrage peut comporter un carré mâle susceptible de s'engager dans un carré femelle disposé sur le mélangeur. On pourrait également prévoir un engagement par un cliquet à bille, la bille étant excentrée de l'axe du compartiment pour pouvoir générer un couple de rotation.

La vis de serrage coopère avec un pas de vis ou un écrou disposé dans le corps de serrure, permettant ainsi son déplacement relatif par rapport au mélangeur. En position dissociée, la vis de serrage 8 est distante du mélangeur, ce qui permet l'introduction de la clé spécifique 25 dans la serrure 24. Une fois le cadenas verrouillé, on sert la vis de serrage 8 et on génère un motif d'identification. Pour ouvrir le cadenas, il est nécessaire, pour introduire à nouveau la clé spécifique, de dévisser la vis de serrage, ce qui a pour effet d'altérer le motif d'identification.

On peut également prévoir, pour renforcer la sécurité du système, de soumettre la paroi de compression à l'action d'un ressort. Ainsi, quand bien même on chercherait à retirer la vis de serrage 8 en maintenant la position de la paroi de compression, celle-ci sera automatiquement déplacée par l'action du ressort.

Selon un exemple de réalisation avantageux, la tête d'actionnement 8a présente un profil spécial de sécurité, dans lequel ou sur lequel ne peut s'engager qu'un profil complémentaire formé par exemple sur une partie de manipulation 25a de la clé spécifique 25. Cette d'actionnement peut alors être protégée par le couvercle 9 pour en limiter l'accès. Ainsi, on réalise un tel profil spécial avec une clé dotée d'un système d'aiguilles, positionnées pour pénétrer dans des orifices correspondants du couvercle 9. Les aiguilles n'accèdent à la tête d'actionnement que si elles présentent la bonne géométrie et la bonne configuration.

L'actionnement de la tête d'actionnement 8a et par conséquent l'altération du motif d'identification n'est alors possible qu'avec la partie de manipulation 25. On empêche ainsi un actionnement malveillant de la tête d'actionnement 8a avec des outils courants, tels que des tournevis ou autres.

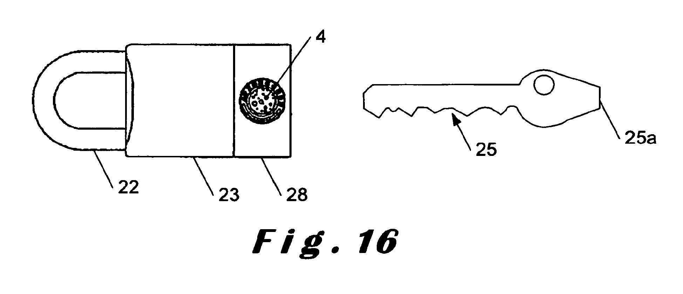

La figure 16 représente un autre exemple de réalisation d'un cadenas conforme à l'invention. Le cadenas comprend un module de sécurité 28 intégrant le dispositif de marquage 1 conforme à l'invention. Le module de sécurité 28 est fixé sur le corps de serrure 23 d'un cadenas de l'état de la technique, de manière à empêcher l'actionnement de la serrure 24 du cadenas. Des moyens de fixation du module de sécurité 28 sur le corps de serrure 23 sont réalisés de telle sorte à n'autoriser une séparation entre ledit corps de serrure 23 et ledit module de sécurité 28 qu'en actionnant la vis de serrage 8.

Le module de sécurité peut être disposé dans le prolongement du cadenas, comme illustré sur la figure 16, ou former une coiffe qui intègre le cadenas, le dispositif de marquage étant disposé de manière à laisser accessible ou obturer l'accès à la serrure 24, comme expliqué ci-dessus à propos d'un dispositif de marquage 1 intégré au cadenas. On peut ainsi obtenir un cadenas doté d'un dispositif de marquage selon l'invention, pour un prix très intéressant.

L'homme du métier pourrait également prévoir que le mélangeur soit actionné directement lors de la fermeture et de l'ouverture du cadenas, par exemple en reliant cinématiquement le mélangeur ou la vis de serrage et l'arceau 22. A cette fin, ce dernier peut être doté d'une crémaillère en prise avec un rouage relié au mélangeur ou à la vis de serrage. On peut alors se passer de la zone à profil spécial pour actionner l'élément de serrage, seule la clé spécifique assurant la formation de l'élément d'identification et son altération en cas d'ouverture.

De manière générale, le dispositif de marquage 1 conforme à l'invention peut présenter une forme de section transversale circulaire, rectangulaire, carrée ou autre. Le cas échéant, le dispositif de marquage peut être chassé dans son support. Le guichet peut être de forme particulière, pour laisser voir le dispositif de marquage tout en dessinant un logo. La paroi apparente 3 peut également être seulement partiellement transparente, en la couvrant d'un masque, par exemple, permettant également de former un logo. Le dispositif de marquage peut en outre recevoir des finitions décoratives, de type perlage ou sertissage.

On peut également prévoir d'associer la paroi de compression 5a avec un élément de contrôle visuel, visible depuis l'extérieur du dispositif de marquage et permettant à un utilisateur de contrôler aisément si le dispositif de marquage est en état serré ou en état desserré.

On pourra encore envisager, particulièrement dans le cas où l'élément de marquage est associé à une oeuvre d'art, d'introduire dans le compartiment, une particule de l'artiste, tels que des cheveux, permettant, notamment par son ADN, d'authentifier l'oeuvre.

Il est évident que la présente description ne se limite pas aux exemples explicitement décrits, mais comprend également d'autres modes de réalisation et/ou de mise en oeuvre.

## Revendications

1. Dispositif de marquage (1) comportant un motif d'identification unique et aléatoire, et comprenant :
- un compartiment creux (2) dont au moins une paroi apparente (3) est réalisée au moins localement avec un matériau transparent (4) formant un accès visuel audit compartiment creux (2),
- des particules solides (6) contenues dans le compartiment creux (2),
- et des moyens de codage pour comprimer les particules solides (6) contre le matériau transparent (4), générant ainsi le motif d'identification,
**caractérisé en ce que** les moyens de codage comprennent d'une part une paroi de compression (5a) disposée en regard de la paroi apparente (3) laquelle est solidaire d'un cylindre (5b) pour former le compartiment creux (2), ladite paroi de compression (5a) recouvrant l'espace contenant les particules solides (6) et d'autre part des moyens d'activation pour déplacer la paroi de compression (5a) en direction de la paroi apparente (3) et pour immobiliser ladite paroi de compression (5a) dans une position dans laquelle les particules solides (6) sont comprimées et immobilisées contre le matériau transparent (4).

2. Dispositif de marquage (1) selon la revendication 1, **caractérisé en ce que** les particules solides (6) présentent des couleurs et/ou des dimensions et/ou des morphologies différentes pour générer le motif d'identification accessible visuellement au travers du matériau transparent (4).

3. Dispositif de marquage (1) selon la revendication 2, **caractérisé en ce que** les particules solides (6) comprennent un mélange de matériaux différents.

4. Dispositif de marquage (1) selon l'une quelconque des revendications 1 à 3, caractérisé en ce les particules solides (6) sont choisies parmi une famille de particules comprenant notamment au moins un matériau sous forme de paillettes ou de copeaux, des fils, des diamants, de l'or en pépites, du sable ou d'autres cristaux spécifiques.

5. Dispositif de marquage (1) selon l'une quelconque des revendications 1 à 4, **caractérisé en ce qu'**il comporte un repère (3a), du genre alphanumérique, disposé sur ou à la périphérie du matériau transparent (4).

6. Dispositif de marquage (1) selon l'une des revendications précédentes, **caractérisé en ce que** les moyens d'activation comprennent une vis de serrage (8) vissée au travers d'un couvercle externe (9) recouvrant le compartiment creux (2) et fixé sur le cylindre (5b), la paroi de compression (5a) étant fixée sur une extrémité de la vis de serrage (8), une tête d'actionnement (8a) formant une extrémité accessible de la vis de serrage (8).

7. Dispositif de marquage (1) selon la revendication 6, **caractérisé en ce que** la paroi de compression (5a) est solidaire en rotation de la vis de serrage (8) et comporte un organe mélangeur (10) engagé dans l'espace occupé par les particules solides (6).

8. Dispositif de marquage (1) selon la revendication 6, **caractérisé en ce que** la paroi de compression (5a) est traversée par l'extrémité de la vis de serrage (8), ladite extrémité étant solidaire en rotation d'un organe mélangeur (10) s'étendant au dessus de la paroi de compression (5a) pour tourner avec la vis de serrage (8) et mélanger les particules solides (6).

9. Pièce d'horlogerie comportant notamment une boîte (12), un cadran (13) et un mécanisme agencé à l'intérieur de la boîte (12), **caractérisée en ce qu'**elle comporte un dispositif de marquage (1) selon l'une quelconque des revendications 6 à 8, ledit dispositif de marquage (1) traversant le mécanisme pour présenter la paroi apparente (3) dans un guichet (13a) ménagée dans le cadran (13) et pour bloquer un couvercle ou un support (80) dudit mécanisme ou une pièce retenant ledit mécanisme dans une position de montage, par l'intermédiaire du couvercle externe (9) ou de la tête d'actionnement (8a).

10. Cadenas comportant un arceau (22) monté sur un corps de serrure (23) dans lequel est agencée une serrure (24) actionnable par l'intermédiaire d'une clé spécifique (25), laquelle permet une fois engagée dans ladite serrure (24), de verrouiller et de déverrouiller l'arceau (22), **caractérisé en ce qu'**il comporte un dispositif de marquage (1) selon l'une quelconque des revendications 6 à 8, ledit dispositif de marquage (1) étant associé au corps de serrure (23) de manière à laisser visible la paroi apparente (3) et à présenter la tête d'actionnement (8a), ladite tête d'actionnement (8a) étant susceptible d'évoluer entre une première position dans laquelle elle s'étend au moins partiellement au niveau de la serrure (24) pour empêcher l'introduction complète de la clé spécifique (25) dans la serrure (24) lorsque la paroi de compression (5a) comprime et immobilise les particules solides (6) contre le matériau transparent (4), et une deuxième position dans laquelle elle autorise l'introduction complète de la clé spécifique (25) dans la serrure (24), le passage de la deuxième à la première position générant le motif d'identification et le passage de la première à la deuxième position entraînant une altération du motif d'identification précédemment généré.

11. Cadenas selon la revendication 10, **caractérisé en ce que** le dispositif de marquage est intégré dans le corps de serrure, la paroi apparente (3) étant visible dans une ouverture (26a) d'une première face (26) du corps de serrure (23) et la tête d'actionnement (8a) étant apparente dans une autre ouverture (27a) d'une autre face (27) du corps de serrure.

12. Cadenas selon la revendication 10, **caractérisé en ce que** le dispositif de marquage est disposé dans un module de sécurité associé audit cadenas.

13. Cadenas selon la revendication 12, **caractérisé en ce que** ledit module de sécurité (28) est fixé sur le corps de serrure (23) par l'intermédiaire de moyens de fixation pour empêcher l'actionnement de la serrure (24), les moyens de fixation étant réalisés pour coopérer avec le dispositif de marquage (1) en actionnant la vis de serrage (8) lors d'une séparation entre le corps de serrure (23) et le module de sécurité (28).

## Patentansprüche

1. Markierungsvorrichtung (1), die ein einziges und zufälliges Identifikationsmotiv aufweist und umfasst:
- ein hohles Fach (2), von dem mindestens eine sichtbare Wand (3) mindestens lokal aus einem durchsichtigen Material (4) hergestellt ist, das einen visuellen Zugang zum hohlen Fach (2) bildet,
- feste Partikel (6), die in dem hohlen Fach (2) enthalten sind,
- und Codierungsmittel, um die festen Partikel (6) gegen das durchsichtige Material (4) zu komprimieren, wodurch das Identifikationsmotiv erzeugt wird,
**dadurch gekennzeichnet, dass** die Codierungsmittel einerseits eine Kompressionswand (5a) gegenüber der sichtbaren Wand (3), die mit einem Zylinder (5b) fest verbunden ist, um das hohle Fach (2) zu bilden, wobei die Kompressionswand (5a) den Raum bedeckt, der die festen Partikel (6) enthält, und andererseits Aktivierungsmittel, um die Kompressionswand (5a) in Richtung der sichtbare Wand (3) zu verlagern und um die Kompressionswand (5a) in einer Position zu immobilisieren, in der die festen Partikel (6) gegen das durchsichtige Material (4) komprimiert und immobilisiert werden, umfassen.

2. Markierungsvorrichtung (1) nach Anspruch 1, **dadurch gekennzeichnet, dass** die festen Partikel (6) unterschiedliche Farben und/oder Größen und/oder Morphologien aufweisen, um das durch das durchsichtige Material (4) visuell zugängliche Identifikationsmotiv zu erzeugen.

3. Markierungsvorrichtung (1) nach Anspruch 2, **dadurch gekennzeichnet, dass** die festen Partikel (6) ein Gemisch verschiedener Materialien umfassen.

4. Markierungsvorrichtung (1) nach einem der Ansprüche 1 bis 3, **dadurch gekennzeichnet, dass** die festen Partikel (6) aus einer Familie von Partikeln ausgewählt sind, die insbesondere mindestens ein Material in Form von Pailletten oder von Spänen, Drähte, Diamanten, Goldsplitter, Sand oder andere spezielle Kristalle umfassen.

5. Markierungsvorrichtung (1) nach einem der Ansprüche 1 bis 4, **dadurch gekennzeichnet, dass** sie einen Bezug (3a) alphanumerischer Art aufweist, der auf oder am Umfang des durchsichtigen Materials (4) angeordnet ist.

6. Markierungsvorrichtung (1) nach einem der vorangehenden Ansprüche, **dadurch gekennzeichnet, dass** die Aktivierungsmittel eine Spannschraube (8) umfassen, die durch einen externen Deckel (9) geschraubt ist, der das hohle Fach (2) bedeckt und auf dem Zylinder (5b) befestigt ist, wobei die Kompressionswand (5a) auf einem Ende der Spannschraube (8) befestigt ist, wobei ein Betätigungskopf (8a) ein zugängliches Ende der Spannschraube (8) bildet.

7. Markierungsvorrichtung (1) nach Anspruch 6, **dadurch gekennzeichnet, dass** die Kompressionswand (5a) mit der Spannschraube (8) in Rotation fest verbunden ist und ein Mischorgan (10) in dem Raum aufweist, der von den festen Partikel (6) besetzt ist.

8. Markierungsvorrichtung (1) nach Anspruch 6, **dadurch gekennzeichnet, dass** die Kompressionswand (5a) von dem Ende der Spannschraube (8) durchquert ist, wobei das Ende mit einem Mischorgan (10) in Rotation fest verbunden ist, das sich über der Kompressionswand (5a) erstreckt, um mit der Spannschraube (8) zu drehen und die festen Partikel (6) zu mischen.

9. Uhr, die insbesondere ein Gehäuse (12), ein Zifferblatt (13) und einen im Innern des Gehäuses (12) ausgebildeten Mechanismus aufweist, **dadurch gekennzeichnet, dass** sie eine Markierungsvorrichtung (1) nach einem der Ansprüche 6 bis 8 aufweist, wobei die Markierungsvorrichtung (1) den Mechanismus durchquert, um die sichtbare Wand (3) in einem in dem Zifferblatt (13) ausgearbeiteten Fenster (13a) zu präsentieren und um einen Deckel oder einen Halter (80) des Mechanismus oder ein Teil, das den Mechanismus in einer Montageposition hält, mit Hilfe des externen Deckels (9) oder des Betätigungskopfs (8a) zu blockieren.

10. Vorhängeschloss, das einen Bügel (22) aufweist, der auf einem Schlosskörper (23) montiert ist, in dem ein mit einem speziellen Schlüssel (25) betätigbares Schloss (24) ausgebildet ist, der erlaubt, sobald er in das Schloss (24) eingeführt ist, den Bügel (22) zu verriegeln und zu entriegeln, **dadurch gekennzeichnet, dass** es eine Markierungsvorrichtung (1) nach einem der Ansprüche 6 bis 8 aufweist, wobei die Markierungsvorrichtung (1) dem Schlosskörper (23) derart zugeordnet ist, dass die sichtbare Wand (3) sichtbar bleibt und der Betätigungskopf (8a) präsentiert wird, wobei der Betätigungskopf (8a) imstande ist, sich zwischen einer ersten Position, in welcher er sich mindestens teilweise im Bereich des Schlosses (24) erstreckt, um das vollständige Einführen des speziellen Schlüssels (25) in das Schloss (24) zu verhindern, wenn die Kompressionswand (5a) die festen Partikel (6) gegen das durchsichtige Material (4) komprimiert und immobilisiert, und einer zweiten Position, in welcher er das vollständige Einführen des speziellen Schlüssels (25) in das Schloss (24) erlaubt, zu bewegen, wobei der Übergang von der zweiten in die erste Position das Identifikationsmotiv erzeugt und der Übergang aus der ersten in die zweite Position eine Beeinträchtigung des zuvor erzeugten Identifikationsmotivs erzeugt.

11. Vorhängeschloss nach Anspruch 10, **dadurch gekennzeichnet, dass** die Markierungsvorrichtung in den Schlosskörper integriert ist, wobei die sichtbare Wand (3) in einer Öffnung (26a) einer ersten Fläche (26) des Schlosskörpers (23) sichtbar ist und der Betätigungskopf (8a) in einer anderen Öffnung (27a) einer anderen Fläche (27) des Schlosskörpers erscheint.

12. Vorhängeschloss nach Anspruch 10, **dadurch gekennzeichnet, dass** die Markierungsvorrichtung in einem dem Vorhängeschloss zugeordneten Sicherheitsmodul angeordnet ist.

13. Vorhängeschloss nach Anspruch 12, **dadurch gekennzeichnet, dass** das Sicherheitsmodul (28) auf dem Schlosskörper (23) mit Hilfe von Befestigungsmitteln befestigt ist, um die Betätigung des Schlosses (24) zu verhindern, wobei die Befestigungsmittel ausgebildet sind, um mit der Markierungsvorrichtung (1) durch Betätigen der Spannschraube (8) bei einer Trennung zwischen dem Schlosskörper (23) und dem Sicherheitsmodul (28) zusammenzuarbeiten.

## Claims

1. A marking device (1) including a unique and random identification pattern, and comprising:
- a hollow compartment (2) whereof at least one visible wall (3) is made at least locally with a transparent material (4) forming visual access to said hollow compartment (2),
- solid particles (6) contained in the hollow compartment (2),
- and including means to compress the solid particles (6) against the transparent material (4), thereby generating the identification pattern,
**characterized in that** the encoding means on the one hand comprise a compression wall (5a) positioned across from the visible wall (3), which is securely fastened to a cylinder (5b) in order to form a hollow compartment (2), said compression wall (5a) covering the space containing the solid particles (6), and on the other hand comprising activation means to move the compression wall (5a) toward the visible wall (3) and to immobilize said compression wall (5a) in a position in which the solid particles (6) are compressed and immobilized against the transparent material (4).

2. The marking device (1) according to claim 1, **characterized in that** the solid particles (6) have different colors and/or dimensions and/or morphologies in order to generate the identification pattern visually accessible through the transparent material (4).

3. The marking device (1) according to claim 2, **characterized in that** the solid particles (6) comprise a mixture of different materials.

4. The marking device (1) according to any one of claims 1 to 3, **characterized in that** the solid particles (6) are chosen from among a family of particles in particular comprising at least one material in the form of grains or chips, wires, diamonds, gold flakes, sand or other specific crystals.

5. The marking device (1) according to any one of claims 1 to 4, **characterized in that** it includes a guide-mark (3a), of the alphanumeric type, positioned on or at the periphery of the transparent material (4).

6. The marking device (1) according to one of the preceding claims, **characterized in that** the activation means comprise a tightening screw (8) screwed through an outer cover (9) covering the hollow compartment (2) and fastened on the cylinder (5b), the compression wall (5a) being fastened on one end of the tightening screw (8), an actuating head (8a) forming an accessible end of the tightening screw (8).

7. The marking device (1) according to claim 6, **characterized in that** the compression wall (5a) is securely fastened in rotation to the tightening screw (8) and includes a mixing organ (10) engaged in the space occupied by the solid particles (6).

8. The marking device (1) according to claim 6, **characterized in that** the compression wall (5a) is crossed through by the end of the tightening screw (8), said end being securely fastened in rotation to a mixing organ (10) extending above the compression wall (5a) to rotate with the tightening screw (8) and mix the solid particles (6).

9. A timepiece in particular including a box (12), a dial (13) and the mechanism arranged inside the box (12), **characterized in that** it includes a marking device (1) according to any one of claims 6 to 8, said marking device (1) crossing through the mechanism to show the visible wall (3) in an aperture (13a) arranged in the dial (13) and to lock a cover or a support (80) of said mechanism or a piece keeping said mechanism in an assembly position, by means of the outer cover (9) or the actuating head (8a).

10. A padlock including a shackle (22) mounted on a lock body (23) in which a lock (24) is arranged that can be actuated using a specific key (25), which makes it possible, once engaged in said lock (24), to lock and unlock the shackle (22), **characterized in that** it includes a marking device (1) according to any one of claims 6 to 8, said marking device (1) being associated with the lock body (23) so as to leave the visible wall (3) visible and show the actuating head (8a), said actuating head (8a) being able to go between a first position in which it extends at least partially at the lock (24) to prevent the complete insertion of the specific key (25) into the lock (24) when the compression wall (5a) compresses and immobilizes the solid particles (6) against the transparent material (4), and a second position in which it allows the complete insertion of the specific key (25) into the lock (24), the passage from the second to the first position creating the identification pattern and the passage from the first to the second position causing an alteration of the identification pattern previously generated.

11. The padlock according to claim 10, **characterized in that** the marking device is integrated into the lock body, the visible wall (3) being visible in an opening (26a) of a first face (26) of the lock body (23) and the actuating head (8a) being visible in another opening (27a) of another face (27) of the lock body.

12. The padlock according to claim 10, **characterized in that** the marking device is positioned in a security module associated with said padlock.

13. The padlock according to claim 12, **characterized in that** said security module (28) is fastened on the lock body (23) using fastening means to prevent the lock (24) from being actuated, the fastening means being made to cooperate with the marking device (1) by actuating the tightening screw (8) during separation between the lock body (23) and the security module (28).
